# EUROPEAN PATENT APPLICATION

(11) **EP 2 571 293 A1**
(43) Date of publication of application: **20.03.2013**
(21) Application number: 11181104.8
(22) Date of filing: 13.09.2011
(51) Int. Cl.: H04W 4/02

(54) **Communication system with nfc-enabled personalized services and related methods**

(71) Applicant: Research In Motion Limited, Waterloo, ON N2L 3W8 (CA)
(72) Inventor: Skutnick, Jeffrey Brian, Rolling Meadows, IL 60008 (US)
(74) Representative: Hibbert, Juliet Jane Grace

(57) **Abstract**

A communication system may include at least one first near-field communication (NFC) device associated with a position, and a server configured to provide at least one localized service from among a plurality of localized services based upon the at least one first NFC device. The communication system may also include at least one mobile wireless communications device comprising a second NFC device, and a controller coupled to the second NFC device and configured to transmit profile data to the at least one first NFC device based upon proximity. The server may be configured to selectively change the at least one localized service based upon the profile data.

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a schematic block diagram of an example embodiment of a communication system.

FIG. 2 is a flowchart illustrating method aspects associated with operation of the wireless communication system of FIG. 1.

FIG. 3 is a schematic block diagram illustrating example components of a mobile wireless communications device that may be used with the communication system of FIG. 1.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communication system is disclosed herein that may comprise at least one first near-field communication (NFC) device associated with a position, and a server configured to provide at least one localized service from among a plurality of localized services based upon the at least one first NFC device. The communication system may also include at least one mobile wireless communications device comprising a second NFC device, and a controller coupled to the second NFC device and configured to transmit profile data to the at least one first NFC device based upon proximity. The server may be configured to selectively change the at least one localized service based upon the profile data.

For example, the profile data may comprise at least one of the following: a social media tag value, a gender value, or a language value. In some embodiments, the controller may be configured to transmit an expiration time value to the server. The server may be configured to selectively change the at least one localized service again based upon the expiration time value. Also, the server may be configured to delete the profile data based upon the expiration time value.

In other embodiments, the controller may have at least one changeable parameter, and the controller may be configured to cooperate with the second NFC device to selectively change the at least one changeable parameter based upon the at least one first NFC device. For example, the plurality of localized services may comprise localized restaurant services for a restaurant having a plurality of tables, and the at least one first NFC device may comprise a plurality of first NFC devices associated with the plurality of tables. Furthermore, the profile data may comprise at least one of the following: a table preference, a language preference, or a dietary preference.

Also, for example, the plurality of localized services may comprise localized arena services for an arena having a plurality of seating sections, and the at least one first NFC device may comprise a plurality of first NFC devices associated with the plurality of seating sections. Additionally, the profile data may comprise at least one of the following: a seating section preference or a dietary preference.

An example aspect is directed to a server that may comprise a processor and associated memory cooperating with each other. The processor may be configured to communicate with at least one NFC device associated with a position, and provide at least one localized service from among a plurality of localized services based upon the at least one NFC device. The processor and memory may be configured to receive profile data from at least one mobile wireless communications device via the at least one NFC device, and selectively change the at least one localized service based upon the profile data.

An example aspect is directed to a method of providing at least one localized service from among a plurality of localized services for at least one mobile wireless communalizations device in communications with at least one first NFC device. The method may include providing the at least one localized service to the at least one mobile wireless communications device by receiving profile data associated with the at least one mobile wireless communications device using the at least one first NFC device in proximity and a second NFC device in the at least one mobile wireless communications device, and selectively changing the at least one localized service based upon the profile data.

Example mobile wireless communications devices may include portable or personal media players (e.g., music or MP3 players, video players, electronic book readers, etc.), remote controls (e.g., television or stereo remotes, etc.), portable gaming devices, portable or mobile telephones, smartphones, tablet computers, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

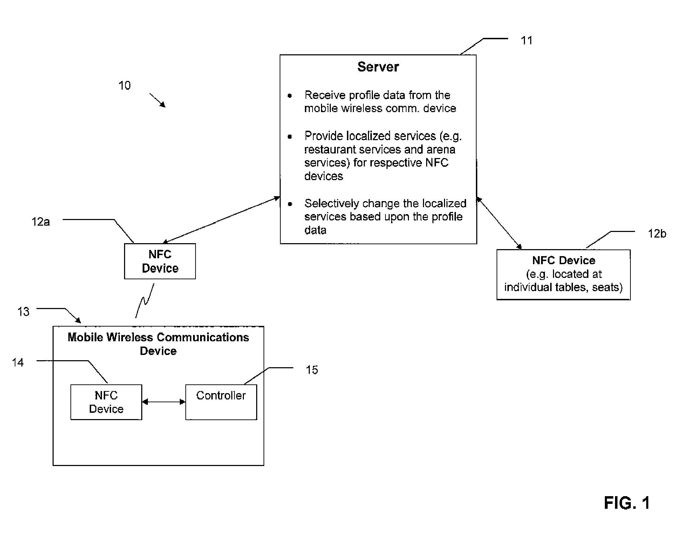

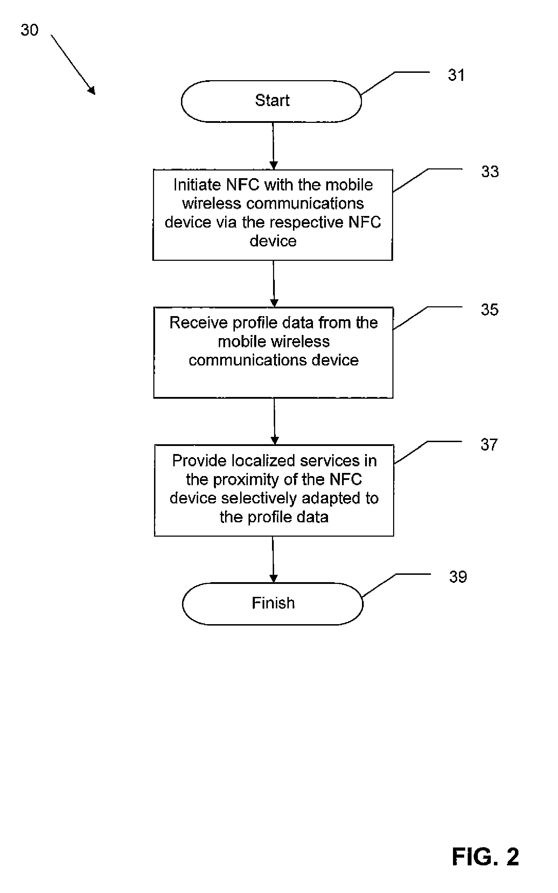

Referring now to FIG. 1, a communication system 10 according to the present disclosure is now described. Moreover, with reference additionally to FIG. 2, a flowchart 30 illustrates a method of operating the wireless communication system 10 and begins at Block 31. The communication system 10 illustratively includes a server 11, and a plurality of NFC devices or sensors 12a-12b associated with the server. Each NFC device **12a-12b** is associated with a corresponding position. Although illustrated as including two NFC devices **12a-12b,** in other embodiments, the communication system 10 may only include one NFC device or more than the illustrated two. The server 11 is illustratively configured to provide at least one localized service from among a plurality of localized services based upon the NFC devices **12a-12b** (Block **33**).

For example, the communication system **10** may be adapted to provide the localized services comprising localized restaurant services for a restaurant having a plurality of tables or to provide the localized services comprising localized arena/stadium services. In restaurant embodiments, each of the NFC devices **12a-12b** may be installed adjacent individual tables and/or adjacent an entrance, i.e., each table is at a respective position. In arena/stadium embodiments, each of the NFC devices **12a-12b** may be installed adjacent individual seats, adjacent individual sections, or adjacent an entrance to a section. Of course, the communication system **10** may be adapted to provide the localized services in a variety of venue applications, such as, a church, a bar, a museum, etc.

The communications system **10** illustratively includes a mobile wireless communications device **13** comprising an NFC device or circuit **14**, and a controller **15** coupled to the NFC device **14** and configured to transmit profile data to the NFC device **12a** in proximity with the mobile wireless communications device **13** (Block **35**). For example, the profile data may comprise at least one of the following: a social media tag value, a gender value, a language value, a preferred sports team, an ethnicity, a user name value, etc. As will be appreciated by those skilled in the art, the profile data may comprise any data that relates to preferential use for the mobile wireless communications device **13**. In some embodiments, the profile data may comprise information derived from a social networking account associated with the mobile wireless communications device **13**. For example, the profile data may include fan page indicators, friend lists, or other tags from social networking sites, such as FaceBook, MySpace, or Twitter, etc.

The server **11** is illustratively configured to selectively change the localized services provided to the mobile wireless communications device **13** based upon the profile data (Blocks **37 & 39**). Advantageously, the mobile wireless communications device **13** is provided personalized services based upon the transfer of the profile data via an easy and convenient NFC based swipe. Indeed, in embodiments where the server **11** is simultaneously providing localized services to multiple mobile wireless communications devices, each device provides individual profile data via the respective NFC device **12a-12b** in proximity, and the server selectively changes the localized services provided to each mobile device based upon the profile data, thereby enhancing the personalization of the services being provided.

Again, in those embodiments where the server 11 is providing localized restaurant services for a restaurant, the profile data may further comprise at least one of the following: a table preference, a language preference, or a dietary preference. Advantageously, the server **11** may electronically provide the appropriate menu based upon the profile data either electronically, e.g. using wireless local area networking or cellular transceivers, or by directing personnel via point-of-service terminals. For example, the server 11 may provide the appropriate dietary menu (using the dietary preference in the profile data) and in the desired language (using the language preference in the profile data). More so, the server 11 may even direct appropriate personnel to manipulate seating based upon the seating preference in the profile data.

In other advantageous embodiments, the server 11 may have access to the audio-visual media system at the restaurant and may manipulate displayed media as part of the localized services, for example, by displaying a sporting event (on a display adjacent the table corresponding the NFC device **12a-12b** receiving the relevant profile data) related to a preferred sport indicated in the profile data. Similarly, in those embodiments where the server **11** is providing localized arena/stadium services, the profile data may further comprise at least one of the following: a seating section preference or a dietary preference, etc. In yet other embodiments, the communication system 10 may include a plurality of display panels adjacent respective NFC devices **12a-12b**, each being coupled to the server **11** to aid in providing localized services. Via the display panels, the server **11** may, for example, provide customized menus based upon dietary preferences in the received profile data and provide customized entertainment based upon the profile data, such as bar games, etc.

In some embodiments, the controller **15** of the mobile wireless communications device **13** may be configured to transmit an expiration time value to the server **11**. Based upon the expiration time value, the server **11** may be configured to selectively change the at least one localized service again based upon the expiration time value, i.e., the server may reset the localized services to an initial default configuration. Also, for enhanced privacy features, the server **11** may be configured to delete the profile data based upon the expiration time value, and the mobile wireless communications device **13** may provide an authorization prompt before providing some or all of the profile data.

In some embodiments, the controller **15** may selectively manipulate at least one changeable parameter, which relates to operation of the mobile wireless communications device, for example, ringer volume settings, phone profile settings, WLAN connection settings and codes, etc. The controller **15** may be configured to cooperate with the NFC device **14** to selectively change the at least one changeable parameter based upon the NFC device **12a** in proximity. For example, in embodiments where the server **11** provides localized movie theater services, i.e., the NFC devices **12a-12b** may be installed at individual theater seats/theaters, the controller **15** may selectively silence the ringer volume setting and dim screen brightness parameters. In particular, the controller **15** may silence the mobile wireless communications device **13** for a period of time equivalent to the runtime of the movie being shown in the theater.

Advantageously, the server **11** may provide localized services to a plurality of mobile wireless communications devices, each being selectively adapted to the preferences of use for the particular device, with high location defined granularity. This is in contrast to typical approaches, which may use more general location based indicators.

As used herein, "change" of a localized service may include modifying or adapting the localized service, without requiring that the service be changed altogether or substituted for a completely different service. That is, in some embodiments a different type of the same localized service may be provided by the change, such as a different version of a menu in a restaurant implementation, for example. A change of the localized service may also be considered as a personalization or customization of the localized service as well in some embodiments, for example.

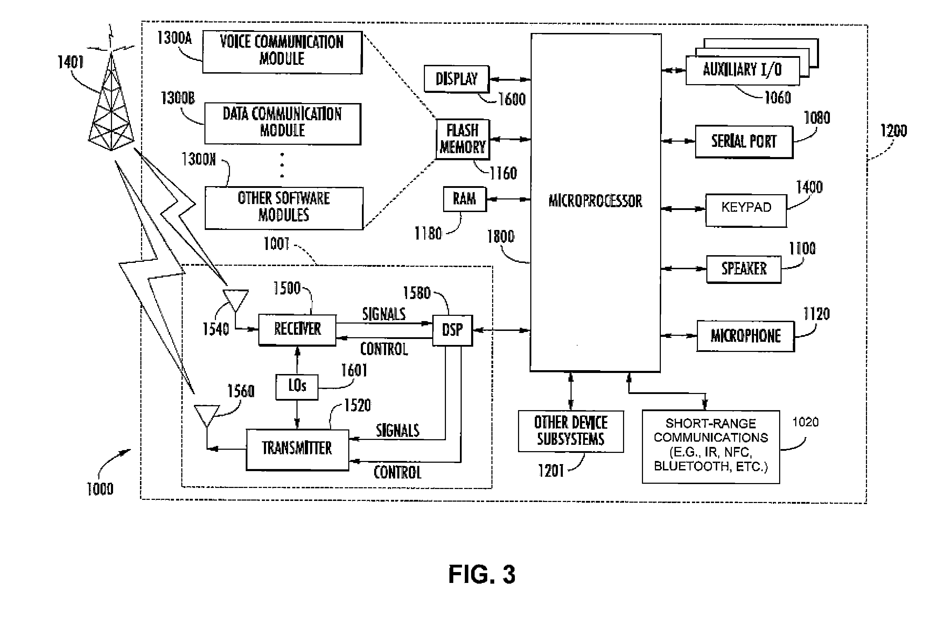

Example components of a mobile wireless communications device **1000** that may be used in accordance with the above-described embodiments are further described below with reference to FIG. 3. The device **1000** illustratively includes a housing 1200, a keyboard or keypad **1400** and an output device **1600**. The output device shown is a display **1600**, which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600**, as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 3. These include a communications subsystem **1001**; a short-range communications subsystem **1020**; the keypad **1400** and the display 1600, along with other input/output devices **1060, 1080, 1100** and **1120;** as well as memory devices **1160, 1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM 1180.

The processing device **1800**, in addition to its operating system functions, enables execution of software applications **1300A-1300N** on the device **1000**. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem **1020**. The communications subsystem 1001 includes a receiver **1500**, a transmitter **1520**, and one or more antennas **1540** and **1560**. In addition, the communications subsystem **1001** also includes a processing module, such as a digital signal processor (DSP) **1580,** and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device may also be used to compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC device for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communication system comprising:
at least one first near-field communication (NFC) device associated with a position;
a server configured to provide at least one localized service from among a plurality of localized services based upon said at least one first NFC device; and
at least one mobile wireless communications device comprising
a second NFC device, and
a controller coupled with said NFC second device, said controller being configured to transmit profile data to said at least one first NFC device based upon proximity;
said server configured to selectively change the at least one localized service based upon the profile data.

2. The communications system according to Claim 1 wherein the profile data comprises at least one of a social media tag value, a gender value, or a language value.

3. The communications system according to Claim 1 wherein said controller is configured to transmit an expiration time value to said server.

4. The communications system according to Claim 3 wherein said server is configured to selectively change the at least one localized service again based upon the expiration time value.

5. The communications system according to Claim 3 wherein said server is configured to delete the profile data based upon the expiration time value.

6. The communications system according to Claim 1 wherein said controller has at least one changeable parameter; and wherein said controller is configured to cooperate with said second NFC device to selectively change the at least one changeable parameter based upon the at least one first NFC device.

7. The communications system according to Claim 1 wherein the plurality of localized services comprises localized restaurant services for a restaurant having a plurality of tables; and wherein said at least one first NFC device comprises a plurality of first NFC devices associated with the plurality of tables.

8. The communications system according to Claim 1 wherein the plurality of localized services comprises localized arena services for an arena having a plurality of seating sections; and wherein said at least one first NFC device comprises a plurality of first NFC devices associated with the plurality of seating sections.

9. A server comprising:
a processor and associated memory cooperating with each other, said processor being configured to
communicate with at least one near-field communication (NFC) device associated with a position,
provide at least one localized service from among a plurality of localized services based upon the at least one NFC device,
receive profile data from at least one mobile wireless communications device via the at least one NFC device, and
selectively change the at least one localized service based upon the profile data.

10. The server according to Claim 9 wherein the profile data comprises at least one of a social media tag value, a gender value, or a language value.

11. The server according to Claim 9 wherein said processor is configured to receive an expiration time value from the at least one mobile wireless communications device.

12. A method of providing at least one localized service from among a plurality of localized services for at least one mobile wireless communalizations device in communications with at least one first near-field communication (NFC) device, the method comprising:
providing the at least one localized service to the at least one mobile wireless communications device by receiving profile data associated with the at least one mobile wireless communications device using the at least one first NFC device in proximity and a second NFC device in the at least one mobile wireless communications device; and
selectively changing the at least one localized service based upon the profile data.

13. The method according to Claim 12 wherein the profile data comprises at least one of a social media tag value, a gender value, or a language value.

14. The method according to Claim 12 further comprising receiving an expiration time value from the at least one mobile wireless communications device.

15. The method according to Claim 12 further comprising selectively changing at least one changeable parameter associated with the at least one mobile wireless communications device based upon the at least one first NFC device.

## Amended claims

### Amended claims in accordance with Rule 137(2) EPC.

**1.** A communication system comprising:
a plurality of first near-field communication NFC devices (12a, 12b) associated with a plurality of different positions;
a server (11) configured to provide at least one localized service from among a plurality of localized services associated with the plurality of positions based upon said first NFC device; and
at least one mobile wireless communications device (13) comprising
a second NFC device (14), and
a controller (15) coupled with said NFC second device, said controller being configured to transmit profile data to a respective first NFC device based upon proximity;
said server configured to selectively change the at least one localized service based upon the profile data.

**2.** The communications system according to Claim 1 wherein the profile data comprises at least one of a social media tag value, a gender value, or a language value.

**3.** The communications system according to Claim 1 wherein said controller is configured to transmit an expiration time value to said server.

**4.** The communications system according to Claim 3 wherein said server is configured to selectively change the at least one localized service again based upon the expiration time value.

**5.** The communications system according to Claim 3 wherein said server is configured to delete the profile data based upon the expiration time value.

**6.** The communications system according to Claim 1 wherein said controller has at least one changeable parameter; and wherein said controller is configured to cooperate with said second NFC device to selectively change the at least one changeable parameter based upon said respective first NFC device.

**7.** The communications system according to Claim 1 wherein the plurality of localized services comprises localized restaurant services for a restaurant having a plurality of tables; and wherein said at least one first NFC device comprises a plurality of first NFC devices associated with the plurality of tables.

**8.** The communications system according to Claim 1 wherein the plurality of localized services comprises localized arena services for an arena having a plurality of seating sections; and wherein said at least one first NFC device comprises a plurality of first NFC devices associated with the plurality of seating sections.

**9.** A server comprising:
a processor and associated memory cooperating with each other, said processor being configured to
communicate with a plurality of near-field communication NFC devices associated with a plurality of different positions,
provide at least one localized service from among a plurality of localized services associated with the plurality of different positions based upon the NFC devices,
receive profile data from at least one mobile wireless communications device via a respective NFC device from among the plurality of NFC devices, and
selectively change the at least one localized service based upon the profile data.

**10.** The server according to Claim 9 wherein the profile data comprises at least one of a social media tag value, a gender value, or a language value.

**11.** The server according to Claim 9 wherein said processor is configured to receive an expiration time value from the at least one mobile wireless communications device.

**12.** A method of providing at least one localized service from among a plurality of localized services for at least one mobile wireless communications device in communications with a given first near-field communication NFC device from among a plurality of first NFC devices associated with a plurality of different positions, the method comprising:
providing the at least one localized service to the at least one mobile wireless communications device by receiving profile data associated with the at least one mobile wireless communications device using the given first NFC device in proximity with a second NFC device in the at least one mobile wireless communications device; and
selectively changing the at least one localized service based upon the profile data and the given first NFC device in proximity with the second NFC device.

**13.** The method according to Claim 12 wherein the profile data comprises at least one of a social media tag value, a gender value, or a language value.

**14.** The method according to Claim 12 further comprising receiving an expiration time value from the at least one mobile wireless communications device.

**15.** The method according to Claim 12 further comprising selectively changing at least one changeable parameter associated with the at least one mobile wireless communications device based upon the at least one first NFC device.
